# FASCICULE DE BREVET EUROPEEN

(11) **EP 2 047 754 B1**
(45) Date de publication et mention de la délivrance du brevet: **26.02.2014**
(21) Numéro de dépôt: 07019870.0
(22) Date de dépôt: 10.10.2007
(51) Int. Cl.: A23C 9/154, A23L 1/0522, A23L 1/0524, A23L 1/187

(54) **Composition alimentaire lactée cuite, contenant des oeufs et une préparation acide et comprenant des pectines**
Milchhaltige gekochte Lebensmittelzusammensetzung mit Eiern und einer Säurezubereitung sowie Pektinen
Cooked milky food composition containing eggs and an acid preparation and comprising pectins

(43) Date de publication de la demande: 15.04.2009
(73) Titulaire: Nestec S.A., 1800 Vevey (CH)
(72) Inventeur: Munck, Michael, 1786 Sugiez (CH)
(74) Mandataire: Cogniat, Eric Jean Marie

(56) Documents cités:
- EP-A- 0 922 393
- FR-A- 2 156 659
- FR-A- 2 296 376
- GB-A- 2 194 876
- US-A- 3 409 443
- DATABASE WPI Week 198124 Derwent Publications Ltd., London, GB; AN 1981-42976D XP002473489 -& JP 56 045170 A (ASAHI CHEM IND CO LTD) 24 avril 1981 (1981-04-24)
- DATABASE WPI Week 198332 Derwent Publications Ltd., London, GB; AN 1983-732154 XP002473490 -& JP 58 111652 A (MEIJI MILK PROD CO LTD) 2 juillet 1983 (1983-07-02)
- PHILLIPS, G.O. ET AL.: "Handbook of hydrocolloids, pp. 183-184" 2000, WOODHEAD PUBLISHING , CAMBRIDGE, UK , XP002473488 * le document en entier *

## Description

L'invention concerne une composition alimentaire lactée cuite à base d'oeuf contenant une préparation acide (e.g. préparation à base de fruit...).
Les compositions alimentaires lactées à base d'oeufs et contenant des préparations acides, en particulier des fruits, le sont sous forme de produits multicouche. En effet, les sauces/ préparations acides sont disposées en couches non miscibles au produit lacté ou en aromatisation directement dans la masse.
Aussi, les compositions alimentaires lactées à base d'oeufs, cuites au four, comme par exemple les entremets aux oeufs ou les desserts lactés tels que les petits pots de crème, éventuellement aromatisés, sont en général à base d'oeufs entiers et de crème. L'incorporation d'une préparation acide en présence d'oeuf pose des problèmes de cuisson en termes de floculation, de couleur et de sédimentation.

US-A-3 409 443 divulgue un procédé pour préparer une crème, comprenant les étapes de mélanger une hydrocolloïde, du lait, du jaune d'oeuf et un composé comprenant un anion séquestrant, de chauffer le mélange à l'ébullition et de laisser faire prise. De préférence, l'agent séquestrant est le citrate trisodique et l'hydrocolloïde est de la pectine à faible degré de méthylation. Le dessert obtenu a une bonne texture onctueuse.
Cependant, la proportion d'oeufs joue un rôle important dans la texturation. II est donc recherché une solution pour incorporer une préparation acide telle-que des préparations à base de fruits, légumes, ou chocolat, par exemple, dans de telles compositions lactées à base d'oeufs, cuites au four, tout en évitant les problèmes de floculation à la cuisson et en conservant les qualités de texture et de couleur obtenues avec les compositions lactées à base d'oeufs entiers traditionnelles.
On a maintenant trouvé que l'addition de pectines associée à un traitement thermique permettait d'obtenir une composition alimentaire lactée cuite contenant des oeufs et une préparation acide ayant la texture souhaitée en sortie de cuisson, notamment ayant une résistance aux chocs convenable, tout en permettant d'éviter les problèmes de floculation, de texture et de couleur mentionnés plus haut.
On a également trouvé que l'effet texturant ne pouvait être obtenu en l'absence d'oeuf, contrairement à ce qu'on peut observer en utilisant des hydrocolloïdes gélifiants tels que les carraghénanes ou la caroube, qui interagissent avec les protéines du lait et peuvent présenter des propriétés gélifiantes en absence d'oeuf.
Les pectines sont des polymères d'acide D-galacturonique dont les unités sont liées entre elles par des liaisons glycosidiques 1→ 4, extraits de végétaux, notamment de l'écorce de citrus, de marc de pomme ou de betterave. Cet enchaînement peut être interrompu par des unités méthylpentose ou L-rhamnose, ainsi que par des branches ramifiées de sucre neutres, tels que des galactoses, des arabinoses ou des xyloses.
Les pectines sont en général caractérisées par leur teneur en acide galacturonique, leur longueur de chaîne et leur nombre de substituants non-osidiques. Elles sont également caractérisées par leur degré de méthylation, qui définit le pourcentage d'acide galacturonique sous forme d'ester méthylique.
En fonction de cette estérification, on distingue les pectines à haut degré de méthylation ou pectines HM (pour « high methyl »), qui ont un degré d'estérification supérieur à 50% (c'est-à-dire que plus de 50% des acides glucuroniques sont méthylés), et les pectines à faible degré de méthylation ou pectines LM (pour « low methyl »), qui ont un degré d'estérification inférieur à 50% (c'est à dire que moins de 50% des acides glucuroniques sont méthylés).
Les pectines sont largement utilisées dans les produits alimentaires, par exemple en tant qu'agent de prise dans des produits en conserves, des confitures ou des gelées ; en tant qu'agent stabilisant dans les jus de fruits ; en tant qu'agent émulsifiant dans des huiles minérales, des mayonnaises ou des substituts d'oeufs ; ou encore en boulangerie ou en pâtisserie en tant qu'agent rétenteur d'eau ou en tant qu'agent de charge.
Toutefois, aucune de ces utilisations ne suggère de combiner, dans une composition alimentaire lactée contenant des oeufs, et une préparation acide l'ajout de pectine, la réduction de la teneur en oeufs et un traitement thermique, en vue d'obtenir une composition alimentaire lactée cuite contenant des oeufs et une préparation acide , tout en conservant une texture satisfaisante tant sur le plan qualitatif (goût du consommateur), que sur le plan industriel (résistance aux chocs, notamment pendant l'emballage et le transport).

L'invention concerne donc, selon un premier aspect, une composition alimentaire lactée cuite contenant des oeufs et une préparation acide, qui contient au moins une pectine, dans laquelle le rapport pondéral oeufs /pectine est d'environ 5/1 à 40/1, notamment d'environ 5/1 à 20/1, ladite composition étant cuite à une température égale ou supérieure à 70°C.

Par « préparation acide » on entend toute préparation dont le pH est inférieur à 7, et en particulier de préférence supérieur ou égal à 3, à base de :
- fruit ou légume/plante (pulpe, morceaux (cubes visibles, jus, zestes, écorces),
- chocolat ou préparation à base de chocolat (poudre de cacao, beurre de cacao, liqueur de cacao) ou pépites de chocolat
- café ou préparation à base de café
- préparation nutritionnelle acide.

Ladite composition alimentaire lactée peut contenir environ 1 à 40 % en poids, de préférence d'au moins 10% de la préparation à base de fruit. Selon un aspect préféré de l'invention, la préparation acide est ajoutée de manière que la teneur en fruit soit au minimum de 5% en poids dans la composition lactée finale.

De préférence, la teneur en oeufs dans la composition est inférieure ou égale à 14%, notamment de 10 à 14%, en particulier d'au moins 2% et inférieure ou égale à 14%, notamment inférieure à 12%, par rapport au poids de la totalité des ingrédients dans la composition. Avantageusement, la teneur en oeufs est de l'ordre de 2 à 10%, notamment de 3 à 10% par rapport au poids de la totalité des ingrédients dans la composition.
Par « oeufs », on entend aussi bien des oeufs entiers, que des constituants d'oeufs, blanc ou jaune d'oeuf.
Par « teneur en oeufs réduite », on entend une réduction d'au moins 20%, de préférence d'au moins 50%, voire jusqu'à 70% de la quantité d'oeufs qui serait utilisée en l'absence de pectine dans la composition.
Ladite composition alimentaire lactée peut contenir environ 50 à 80% en poids d'au moins un composant à base de lait, par rapport au poids total de la composition. Par « composant à base de lait », on entend par exemple du lait, celui-ci étant entier, partiellement écrémé ou totalement écrémé, éventuellement reconstitué sous forme de poudre, ou encore de la crème.

Avantageusement, la teneur en pectine est de l'ordre de 0,3 à 1%, par rapport au poids de la totalité des ingrédients dans la composition. Les pectines utilisées peuvent être à faible degré de méthylation (pectines LM), provenant par exemple de pomme ou de citron, ou à haut degré de méthylation (pectines HM), les pectines LM étant préférées. On peut également utiliser un mélange de pectines LM et de pectines HM.

La composition alimentaire selon l'invention peut, en outre, comprendre un ou plusieurs ingrédients usuels dans le domaine, choisis, par exemple, parmi les colorants naturels ou artificiels ou les arômes naturels ou artificiels. Elle peut également contenir des additifs solides sous forme particulaire tels que, par exemple des fragments de fruits secs ou confits ; des fragments de noix, de noisettes, d'amandes, d'écorces d'agrumes ; des céréales, des vermicelles de confiserie etc . Elle peut également contenir un ou plusieurs additifs alimentaires, tels que des agents épaississants et/ou gélifiants et/ou texturants, par exemple, des galactomannanes, des alginates, des carraghénanes, de la gomme de xanthane, de la gélatine et/ou des amidons, et/ou des agents conservateurs.

La composition alimentaire selon l'invention peut être, par exemple, un dessert de type entremets aux oeufs, ou un petit pot de crème, aromatisé ou non.

L'invention concerne également, selon un aspect ultérieur, un procédé de préparation d'une composition alimentaire telle que décrite ci-dessus, comprenant les étapes consistant à :
- préparer un mélange comprenant des oeufs, au moins un composant à base de lait et au moins une pectine et une préparation de fruit, et
- soumettre ledit mélange à une cuisson à une température égale ou supérieure à 70°C.

Avantageusement, ladite composition est dépourvue d'anions séquestrants ou de composés contenant des anions séquestrants.

De préférence, dans le mélange comprenant des oeufs, au moins un composant à base de lait et au moins une pectine, la teneur en oeufs est inférieure ou égale à 14%, notamment de 10 à 14%, en particulier d'au moins 2% et inférieure ou égale à 14%, de préférence inférieure ou égale à 12%, par rapport au poids de la totalité des ingrédients.
Avantageusement, ledit mélange comprend de 2 à 10%, notamment de 3 à 10% en poids d'oeufs, par rapport au poids de la totalité des ingrédients, et 1% à 40% en poids d'une préparation acide.

Selon un aspect préféré, ledit mélange comprend de 0,3 à 1% en poids de pectine par rapport au poids de la totalité des ingrédients.

La cuisson peut être réalisée en l'absence d'agitation, par exemple, dans un four, notamment dans un four à flux d'air sec ou humide, dans une étuve ou dans un bain-marie, en batch ou en continu.

Avantageusement, lors d'une cuisson en continu, la composition est statique dans le pot. La température de cuisson peut être, par exemple, de l'ordre de 70 à 160 °C, en particulier de l'ordre de 70 à 100 °C. La durée de cuisson est variable selon le type de composition alimentaire, et peut être, par exemple, de l'ordre de 15 à 45 min.
Avantageusement, la cuisson sera effectuée sans agitation dans un four à flux d'air sec enrichi en humidité, comme décrit par exemple dans la demande EP-A-922 393. Le taux d'humidité peut être, par exemple, de l'ordre de 60 à 95°C de température humide.
Après cuisson, la composition alimentaire est mise à refroidir, puis réfrigérée, par exemple à une température d'environ 4°C.

L'invention concerne également une composition alimentaire lactée cuite contenant des oeufs et une préparation acide, susceptible d'être obtenue par le procédé décrit ci-dessus.

Dans ledit procédé, les différents paramètres relatifs aux composants du mélange comprenant des oeufs la préparation acide, au moins un composant à base de lait et au moins une pectine, ou aux conditions de cuisson peuvent être choisis parmi ceux définis plus haut dans la présente description.

L'invention est illustrée de manière non limitative par les exemples ci-dessous.

### Exemple 1 : préparation de petits pots de crème aux fruits

On a préparé des petits pots de crème aux fruits dont la composition est indiquée dans le tableau 1 ci-dessous :

**Tableau 1**

| **Ingrédients** | **% en poids** |
|---|---|
| Lait entier 3,5% MG | 55-65 |
| Poudre de lait | 3 |
| Sirop de glucose | 1 à 3 |
| Preparation de fruit Zentis GmbH & Co « Raspberry » Ref 011799 à 50% de fruit | 1 à 40 |
| Sucre | 10 à 12 |
| Amidon natif maïs | 0,5 à 1,5 |
| Crème (45,6 % MG) | 10 |
| Huile de palme | 2 |
| Oeufs entiers | 5 |
| Arôme | 0,7 à 1,2 |
| Pectine LM (LA 415, Danisco) | 0,6 |
| TOTAL | 100,00 |

On procède de la manière suivante : les ingrédients pulvérulents sont pré-mélangés, puis on humidifie le mélange avec le lait chaud puis la crème et l'huile de palme. On soumet ensuite le mélange à un traitement UHT à 130°C pendant quelques secondes. Après refroidissement à 50-70°C, on ajoute les oeufs liquides, et la préparation acide on remplit le récipient et on cuit au four pendant 15 - 45 min à 75 -100°C (cuisson humide).
Le récipient est ensuite scellé et emballé, puis mis à refroidir.
Le produit obtenu a une consistance équivalente à celle d'une crème aux oeufs contenant environ 12% d'oeufs, sans ajout de pectine.

## Revendications

1. Composition alimentaire lactée cuite contenant des oeufs, **caractérisée en ce que** :
- elle contient au moins une pectine,
- une préparation acide
- le rapport pondéral oeufs /pectine est d'environ 5/1 à 40/1, et
- elle est cuite à une température égale ou supérieure à 70°C,
ladite composition selon l'invention étant dépourvue d'anions séquestrants ou de composés contenant des anions séquestrants,
et dans laquelle la préparation acide est constituée de fruit ou légume ou plante, p.ex. pulpe, morceaux, cubes visibles, jus, zestes, écorces, de chocolat ou préparation à base de chocolat, p.ex. poudre de cacao, beurre de cacao, liqueur de cacao ou pépites de chocolat, de café ou préparation à base de café.

2. Composition alimentaire selon la revendication 1, **caractérisée en ce que** la teneur en oeufs est d'au moins 2% et inférieure ou égale à 14%, de préférence inférieure ou égale à 12%, par rapport au poids de la totalité des ingrédients.

3. Composition alimentaire selon l'une quelconque des revendications 1 ou 2, **caractérisée en ce que** la teneur en pectine est de l'ordre de 0,3 à 1%, par rapport au poids de la totalité des ingrédients.

4. Composition alimentaire selon l'une quelconque des revendications 1 à 3, **caractérisée en ce que** le rapport pondéral oeufs /pectine est d'environ 5/1 à 20/1.

5. Composition alimentaire selon l'une quelconque des revendications 1 à 4, **caractérisée en ce qu'**elle comprend environ 50 à 80% d'au moins un composant à base de lait, par rapport au poids de la totalité des ingrédients.

6. Composition alimentaire selon l'une quelconque des revendications 1 à 5, **caractérisée en ce que** la préparation acide a un pH inférieur à 7 et supérieur ou égal à 3.

7. Composition alimentaire selon l'une quelconque des revendications 1 à 6, **caractérisée en ce qu'**elle comprend environ 1 à 40% en poids d'une préparation acide.

8. Composition alimentaire selon l'une quelconque des revendications 1 à 7, **caractérisée en ce qu'**elle consiste en un dessert de type entremets aux oeufs, ou en un petit pot de crème, aromatisé ou non.

9. Procédé de préparation d'une composition alimentaire selon l'une quelconque des revendications 1 à 8 **caractérisé en ce qu'**il comprend les étapes consistant à :
- préparer un mélange comprenant des oeufs, au moins un composant à base de lait et au moins une pectine,
- ajouter une préparation acide constituée de fruit ou légume ou plante (pulpe, morceaux, p.ex. cubes visibles, jus, zeste, écorces, de chocolat ou préparation à base de chocolat, p.ex. poudre de cacao, beurre de cacao, liqueur de cacao ou pépites de chocolat, de café ou préparation à base de café
- soumettre ledit mélange à une cuisson à une température égale ou supérieure à environ 70°C.

10. Procédé selon la revendication 9, **caractérisé en ce que** la cuisson est réalisée en l'absence d'agitation.

11. Procédé selon l'une quelconque des revendications 9 ou 10, **caractérisé en ce que** la cuisson est réalisée dans un four, dans une étuve ou dans un bain-marie en batch ou en continu.

12. Procédé selon l'une quelconque des revendications 9 à 11, **caractérisé en ce que** la cuisson est réalisée à une température de l'ordre de 70 à 160°C, de préférence de l'ordre de 70 à 100°C.

13. Procédé selon la revendication 12 **caractérisé en ce que** la cuisson est réalisée dans un four à flux d'air sec ou dans un four à flux d'air enrichi en humidité.

14. Composition alimentaire susceptible d'être obtenue par le procédé selon l'une quelconque des revendications 9 à 13.

## Patentansprüche

1. Gegarte, eihaltige Milchnahrungszusammensetzung, **dadurch gekennzeichnet, dass**
- sie mindestens ein Pektin,
- eine Säurezubereitung enthält,
- das Gewichtsverhältnis von Ei:Pektin bei ca. 5:1 bis 40:1 liegt, und
- sie bei einer Temperatur von mehr als oder gleich 70°C gegart wird,
wobei die erfindungsgemäße Zusammensetzung frei von Sequestrier-Anionen oder von Sequestrier-Anionen enthaltenden Verbindungen ist, wobei die Säurezubereitung Folgendes umfasst:
- Früchte oder Gemüse oder Pflanzen, wie z.B. Brei, Stücke, erkennbare Würfel, Saft, Zeste, Schale,
- Schokoladenzubereitung oder Zubereitung auf Schokoladenbasis, wie z.B. Kakaopulver, Kakaobutter, alkoholisches Kakaogetränk oder Schokoladenplättchen,
- Kaffeezubereitung oder Zubereitung auf Kaffeebasis.

2. Nahrungszusammensetzung gemäß Anspruch 1, wobei der Eigehalt bei mindestens 2% und weniger als oder gleich 14% liegt, vorzugsweise bei weniger als oder gleich 12%, bezogen auf das Gewicht aller Zutaten.

3. Nahrungszusammensetzung gemäß einem der Ansprüche 1 oder 2, wobei der Pektingehalt in der Größenordnung von 0,3% bis 1% liegt, bezogen auf das Gewicht aller Zutaten.

4. Nahrungszusammensetzung gemäß einem der Ansprüche 1 bis 3, wobei das Gewichtsverhältnis von Ei:Pektin bei ca. 5:1 bis 20:1 liegt.

5. Nahrungszusammensetzung gemäß einem der Ansprüche 1 bis 4, wobei sie ca. 50% bis 80% von mindestens einem Bestandteil auf Milchbasis, bezogen auf das Gewicht aller Zutaten, umfasst.

6. Nahrungszusammensetzung gemäß einem der Ansprüche 1 bis 5, wobei die Säurezubereitung einen pH-Wert von weniger als 7 und mehr als oder gleich 3 aufweist.

7. Nahrungszusammensetzung gemäß einem der Ansprüche 1 bis 6, wobei sie ca. 1% bis 40 Gew-% einer Säurezubereitung umfasst.

8. Nahrungszusammensetzung gemäß einem der Ansprüche 1 bis 7, wobei sie aus einem Dessert wie z.B. einem Dessert auf Eibasis besteht, das mit Sahne oder einem "petit pot de creme (Sahnekännchen)" hergestellt wird [überbackenes Puddingdessert], das aromatisiert werden kann oder auch nicht.

9. Verfahren zur Zubereitung einer Nahrungszusammensetzung gemäß einem der Ansprüche 1 bis 8, wobei das Verfahren die folgenden Schritte umfasst:
- Zubereiten einer Mischung mit Eiern, mindestens einem Bestandteil auf Milchbasis und mindestens einem Pektin, und
Zusetzen einer Säurezubereitung, wobei die Säurezubereitung Folgendes umfasst:
- Früchte oder Gemüse oder Pflanzen wie z.B. Brei, Stücke, erkennbare Würfel, Saft, Zeste, Schale,
- Schokoladenzubereitung oder Zubereitung auf Schokoladenbasis, wie z.B. Kakaopulver, Kakaobutter, alkoholisches Kakaogetränk oder Schokoladenplättchen,
- Kaffeezubereitung oder Zubereitung auf Kaffeebasis,
- Unterziehen der Mischung einem Garen bei einer Temperatur von mehr als oder gleich ca. 70°C.

10. Verfahren gemäß Anspruch 9, wobei das Garen ohne Rühren durchgeführt wird.

11. Verfahren gemäß einem der Ansprüche 9 bis 10, wobei das Garen in einem Ofen, in einem Inkubator oder in einem Wasserbad, schubweise oder durchgehend, durchgeführt wird.

12. Verfahren gemäß einem der Ansprüche 9 bis 11, wobei das Garen bei einer Temperatur in der Größenordnung von 70 bis 160°C durchgeführt wird.

13. Verfahren gemäß Anspruch 12, wobei das Garen in einem Ofen mit einem trockenen Luftstrom oder in einem Ofen mit einem befeuchteten Luftstrom durchgeführt wird.

14. Nahrungszusammensetzung, die mittels des Verfahrens gemäß einem der Ansprüche 9 bis 13 erhalten werden kann, im Wesentlichen wie hier mit Bezug auf eine der Ausführungsformen der Erfindung beschrieben, die in den begleitenden Zeichnungen und/oder Beispielen veranschaulicht werden.

## Claims

1. Cooked milk food composition containing eggs, **characterized in that**
- it contains at least one pectin,
- an acidic preparation,
- the egg/pectin weight ratio is approximately 5/1 to 40/1 and
- it is cooked at a temperature of greater than or equal to 70°C,
said composition according to the invention being devoid of sequestering anions or of compounds containing sequestering anions,
wherein the acidic preparation comprises:
- fruit or vegetable plant, such as e.g. pulp, pieces, visible cubes, juice, zest or peel,
- chocolate or chocolate-based preparation such as e.g cacao powder, cacao butter, cacao liquor or chocolate chips,
- coffee or coffee-based preparation.

2. Food composition according to claim 1, wherein the egg content is at least 2% and less than or equal to 14%, preferably less than or equal to 12%, relative to the weight of all ingredients.

3. Food composition according to any one of claims 1 or 2, wherein the pectin content is of the order from 0.3% to 1%, relative to the weight of all the ingredients.

4. Food composition according to any one of claims 1 to 3, wherein the egg/pectin weight ratio is approximately 5/1 to 20/1.

5. Food composition according to any one of claims 1 to 4, wherein it comprises approximately 50% to 80% of at least one milk-based component, relative to the weight of all the ingredients.

6. Food composition according to any one of claims 1 t o 5, wherein the acidic preparation has a pH of less than 7 and greater than or equal to 3.

7. Food composition according to any one of claims 1 to 6, wherein it comprises approximately 1% to 40% by weight of an acidic preparation.

8. Food composition according to any one of claims 1 to 7, wherein it consists of a dessert such as an egg-based dessert made with cream or a "petit pot de crème" [baked custard dessert], which may or may not be flavoured.

9. Process for preparing a food composition according to any one of claims 1 to 8, wherein said process comprises the steps consisting in:
- preparing a mixture comprising eggs, at least one milk-based component and at least one pectin, and
- adding an acidic preparation,
wherein the acidic preparation comprises:
- fruit or vegetable plant, such as e.g. pulp, pieces, visible cubes, juice, zest or peel,
- chocolate or chocolate-based preparation such as e.g cacao powder, cacao butter, cacao liquor or chocolate chips,
- coffee or coffee-based preparation,
- subjecting said mixture to cooking at a temperature of greater than or equal to approximately 70°C.

10. Process according to claim 9, wherein the cooking is carried out in the absence of agitation.

11. Process according to any one of claims 9 to 10, wherein the cooking is carried out in an oven, in an incubator or in a water bath, batchwise or continuously.

12. Process according to any one of claims 9 to 11, wherein the cooking is carried out at a temperature of the order from 70 to 160°C.

13. Process according to claim 12, wherein the cooking is carried out in an oven with a stream of dry air or in an oven with a stream humidified air.

14. Food composition that can be obtained by means of the progress according to any one of claims 9 to 13.
